# EUROPÄISCHE PATENTANMELDUNG

(11) **EP 4 700 361 A2**
(43) Veröffentlichungstag der Anmeldung: **25.02.2026**
(21) Anmeldenummer: 25191240.8
(22) Anmeldetag: 23.07.2025
(51) Int. Cl.: G01N 3/02, G01N 3/08

(54) **VERFAHREN ZUM POSITIONIEREN VON KLEINVOLUMIGEM SCHÜTTGUT IN EINER BRUCHKAMMER EINES PRÜFGERÄTS**

(30) Priorität: 19.08.2024 DE 102024123620
(71) Anmelder: Kraemer, Thilo, 64291 Darmstadt (DE)
(72) Erfinder: Kraemer, Thilo, 64291 Darmstadt (DE)
(74) Vertreter: Hamel, Armin

(57) **Zusammenfassung**

Die Erfindung betrifft ein Verfahren zum Positionieren von Schüttgütern (10, 14, 15) einer bestimmten Sorte in einer Bruchkammer (1) eines Prüfgeräts (2) mit folgenden aufeinanderfolgenden Schritten:
- ein Schüttgut (10, 14, 15) dieser bestimmten Sorte wird in die Bruchkammer (1) des Prüfgeräts (2) eingebracht, wobei die Bruchkammer (1) einen Bruchtestbereich (25) aufweist;
- mindestens eine Kamera (26) überprüft anhand eines hinterlegten Referenzbildes, ob das Schüttgut (10, 14, 15) in dem Bruchtestbereich (25) der Bruchkammer (1) angeordnet ist;
- liegt das Schüttgut (10, 14, 15) nicht in dem Bruchtestbereich (25), so wird das Schüttgut (10, 14, 15) durch einen Bewegungsmechanismus (7, 4) so lange in der Bruchkammer (1) bewegt, bis das Schüttgut (10, 14, 15) in dem Bruchtestbereich (25) angeordnet ist.

## Beschreibung

Die Erfindung betrifft ein Verfahren zum Positionieren von kleinvolumigem Schüttgut in einer Bruchkammer eines Prüfgeräts nach den Merkmalen des Patentanspruchs 1.

Mit einem. Prüfgerät kann kleinvolumiges Schüttgut hinsichtlich der Qualität, der Masse, der Breite, der Länge und der Härte getestet werden. Bei dem kleinvolumigen Schüttgut kann es sich um pharmazeutische Produkte handeln, wie beispielsweise Körner, Tabletten oder Oblongs. Damit die Härte gemessen werden kann, besitzt das Prüfgerät eine Bruchkammer. In dieser Bruchkammer wird das Schüttgut zerbrochen, wobei über die Kraft, die erforderlich ist, das Schüttgut zu zerbrechen, die Härte ermittelt wird.

Ein solches Prüfgerät ist beispielsweise aus WO 2017/041866 A1 bekannt. Dieses Prüfgerät besitzt eine Bruchkammer zum Messen einer Härte eines Schüttguts umfassend eine Festbacke sowie eine ihr gegenüberliegende bewegliche Pressbacke. Die Bruchkammer weist einen Boden auf, wobei der Boden durch einen Teil eines Plattenelements gebildet wird. Es ist mindestens ein Vibrationsantrieb vorgesehen, der mit dem Plattenelement verbunden ist und mit dem das Plattenelement in Vibration versetzt werden kann. Wird das Plattenelement in Vibration versetzt, so kann das Schüttgut in der Bruchkammer positioniert werden. Durch Bewegung der Pressbacke in Richtung der Festbacke wird das zwischen der Festbacke und der Pressbacke liegende Schüttgut zerbrochen.

Weiterhin ist aus US 5 555 768 A ein Gerät und ein Verfahren zum Testen bestimmter physikalischer Eigenschaften einer Arzneimitteltablette bekannt, bei dem das Gerät die Tablette automatisch in die richtige Ausrichtung für einen Härtetest bringt. In der Prüfvorrichtung wird die zu prüfende Tablette in eine lineare Führungsbahn eingeführt, die die Tablette von einer Dickenprüfstation zu einer Gewichtsprüfstation und schließlich zu einer

Härteprüfstation bewegt. In der Härteprüfstation wird die Ausrichtung der Tablette mittels einer Kamera optisch überprüft. Eine Verarbeitungseinheit vergleicht die Ausrichtung der Tablette mit einer vorgegebenen Ausrichtung für eine ähnlich geformte Tablette. Danach wird die Tablette gedreht, bis die Tablette richtig ausgerichtet ist. Anschließend werden ein Stößel und ein Amboss mit der Tablette in Kontakt gebracht und Stößel und Amboss schrittweise zusammengedrückt, bis die Tablette zerkleinert ist. Die zum Zerkleinern der Tablette erforderliche maximale Kraft wird gemessen und aufgezeichnet.

Wünschenswert wäre es, wenn festgestellt werden könnte, ob das Schüttgut tatsächlich exakt in der Bruchkammer ausgerichtet ist. Damit wäre gewährleistet, das zuverlässige Messwerte für die Härte des Schüttguts erhalten werden.

Um ein Schüttgut optimal in einer Bruchkammer eines Prüfgeräts auszurichten, wird ein Verfahren nach den Merkmalen des Patentanspruchs 1 vorgeschlagen.

Dieses Verfahren zum Positionieren von kleinvolumigen Schüttgütern in einer Bruchkammer eines Prüfgeräts umfasst folgende aufeinanderfolgende Schritte:
1 ein Schüttgut einer bestimmten Sorte wird in der Bruchkammer bereitgestellt, wobei die Bruchkammer durch einen Teil eines Plattenelements gebildet wird;
2 sodann wird mit zumindest einer Kamera ein Bild der Bruchkammer aufgenommen;
3 anschließend wird mit einer Datenverarbeitungseinheit überprüft, ob das mindestens eine aufgenommene Bild mit einem in der Datenverarbeitungseinheit hinterlegten Referenzbild übereinstimmt, das heißt, ob das Schüttgut in einem Bruchtestbereich der Bruchkammer liegt; liegt das Schüttgut in dem Bruchtestbereich, wird der Bruchtest durchgeführt.
4 liegt das Schüttgut hingegen nicht in dem Bruchtestbereich, wird das Schüttgut durch zumindest einen Bewegungsmechanismus so lange in der Bruchkammer bewegt, bis das Schüttgut in dem Bruchtestbereich angeordnet ist. Liegt das Schüttgut schließlich in dem Bruchtestbereich, wird der Bruchtest durchgeführt.

Ein Steuerungscomputer übernimmt dabei die Steuerung des entsprechenden Bewegungsmechanismus. Dazu kann die Datenverarbeitungseinrichtung in dem Steuerungscomputer angeordnet oder aber mit diesem verbunden sein. In dieser Datenverarbeitungseinrichtung ist für diese spezielle Schüttgutsorte ein Referenzbild hinterlegt, das ein Schüttgut dieser Sorte in dem Bruchtestbereich zeigt. Das hinterlegte Referenzbildes zeigt somit die optimale Ausrichtung des Schüttguts in der Bruchkammer. Das von der Datenverarbeitungseinrichtung kommende elektrische Signal veranlasst den Steuerungscomputer ein elektrisches Signal an einen Aktuator abzugeben, wobei der Aktuator den Bewegungsmechanismus veranlasst, das Schüttgut so lange in der Buchkammer zu bewegen, bis das Schüttgut in dem Bruchtestbereich angeordnet ist. Der Bewegungsmechanismus kann durch das Plattenelement und/oder durch eine Pressbacke gebildet sein.

Die Pressbacke weist dazu einen als Pressbackenantrieb ausgebildeten Aktuator auf, mit dem die Pressbacke in Bewegung versetzt wird, wodurch diese Pressbacke das Schüttgut in der Bruchkammer bewegt.

Damit das Schüttgut durch das Plattenelement in der Bruchkammer positioniert werden kann, weist das Plattenelement einen als Vibrationsantrieb ausgebildeten Aktuator auf, mit dem das Plattenelement in Vibration versetzt werden kann, oder einen als Drehantrieb ausgebildeten Aktuator auf, mit dem das Schüttgut in der Bruchkammer bewegt werden kann.

Bei den kleinvolumigen Schüttgütern kann es sich um pharmazeutische Produkte handeln, wie beispielsweise Körner, Tabletten oder Oblongs.

Schließlich betrifft die Erfindung auch ein Prüfgerät zum Positionieren von Schüttgut in der Buchkammer.

Ein Ausführungsbeispiel der Erfindung wird im Folgenden anhand von Figuren näher erläutert. Es zeigen:
- Figur 1: eine schematische Darstellung eines Ausschnitts eines Prüfgeräts;
- Figur 2: einen vergrößerten Ausschnitt des in Figur 1 gezeigten Prüfgeräts und
- Figur 3: einen Schnitt A-A durch den in Figur 1 gezeigten Ausschnitt des Prüfgeräts.

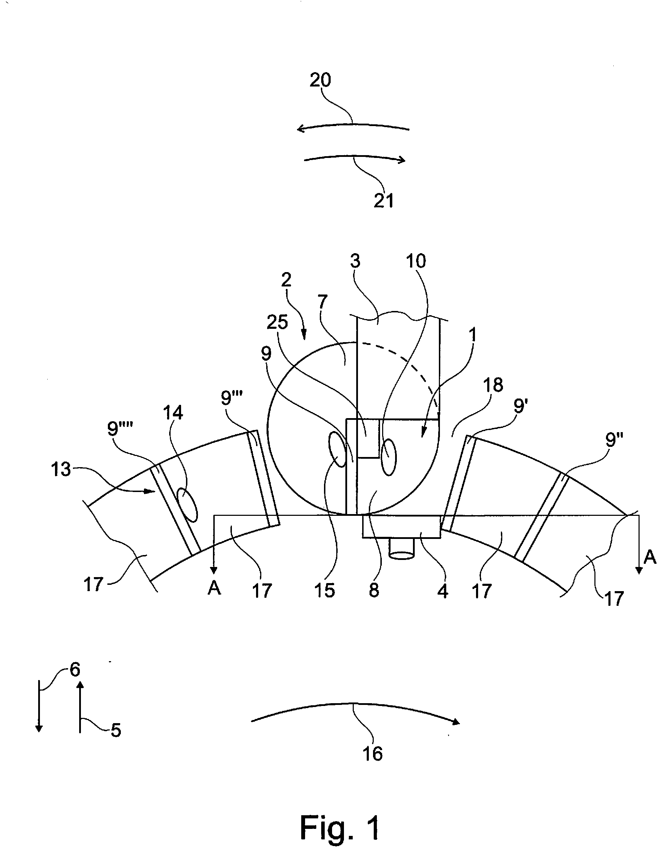

In Figur 1 ist eine schematische Darstellung einer Bruchkammer 1 zum Messen einer Härte eines Schüttguts 10 gezeigt, wobei die Bruchkammer 1 Teil eines Prüfgeräts 2 ist. Von dem Prüfgerät 2 ist nur ein Ausschnitt gezeigt. Bei dem in Figur 1 gezeigten Schüttgut 10 handelt es sich um einen Oblong. In der Bruchkammer 1 ist eine Festbacke 3 sowie eine ihr gegenüberliegende, bewegliche Pressbacke 4 angeordnet. Diese Pressbacke 4 kann in Richtung der Festbacke 3 hinbewegt oder von dieser fortbewegt werden, was durch den Pfeil 5 bzw. den Pfeil 6 angedeutet ist. Das Prüfgerät 2 weist ein Plattenelement 7 auf, wobei ein Teil des Plattenelements 7 einen Boden 8 der Bruchkammer 1 bildet. Das Plattenelement 7 kann auch eine andere Form, zum Beispiel eine ovale, rechteckige oder quadratische Form, aufweisen. Dieses Plattenelement 7 ist mit einem mindestens einem Vibrationsantrieb verbunden, wobei dieser mindestens eine Vibrationsantrieb unterhalb des Plattenelements 7 angeordnet sein kann. Ein Vibrationsantrieb ist in Figur 1 nicht zu sehen. Mittels des Vibrationsantriebs, beispielsweise eines Unwuchtmotors, kann das Plattenelement 7 in Schwingung versetzt werden, so dass das Plattenelement 7 vibriert. Durch die Vibration des Plattenelements 7 wird das Schüttgut 10 in der Bruchkammer 1 bewegt. Die Bruchkammer 1 wird auf der einen Seite von dem Widerlager 9 und auf der anderen Seite von einem weiteren Widerlager 9' begrenzt. Diese Widerlager 9 und 9' sowie die weiteren Widerlager 9", 9‴ und 9ʺʺ gehören zu einer Transportvorrichtung 13, die jedoch nicht im Detail dargestellt ist. Bei der Transportrichtung 13 kann es sich beispielsweise um einen Transportstern oder einen Transportrechen handeln. Da solche Transportvorrichtungen aus dem Stand der Technik bekannt sind, werden diese nicht weiter im Detail beschrieben. Zwischen den Widerlagern 9 und 9' und den Widerlagern 9" und 9‴ ist jeweils ein weiteres Schüttgut 14, 15 angeordnet, wobei das Schüttgut 14 an dem Widerlager 9ʺʺ und das Schüttgut 15 an dem Widerlager 9‴ der Transportvorrichtung 13 anliegt. Mit der Transportvorrichtung 13 können die Schüttgüter 14, 15 nacheinander in die Bruchkammer 1 transportiert werden, nachdem an dem Schüttgut 10 der Bruchtest durchgeführt wurde. Die Schüttgüter 14, 15 werden somit entlang einer Transportebene 17 in Richtung des Pfeils 16 in die Bruchkammer 1 transportiert. Vorzugsweise ist unterhalb des Plattenelements 7 ein Abfallbehälter angeordnet, der jedoch in der Figur 1 nicht zu sehen ist. Wird ein Schüttgut, zum Beispiel das Schüttgut 10, durch einen Bruchtest zerbrochen, so werden größere Reste durch das Widerlager 9 in Richtung einer Öffnung 18, die zwischen dem Plattenelement 7 und der Transportebene 17 angeordnet ist, transportiert. Kleine Reste und Staub werden automatisch durch die Vibration des Plattenelements 7 aus der Bruchkammer 1 entfernt. Dadurch, dass die Reste eines zerbrochenen Schüttguts aber auch Staub allein durch die Vibration des Plattenelements 7 aus der Bruchkammer 1 entfernt werden können, ist die Bruchkammer 1 selbstreinigend. Auf zusätzliche Vorrichtungen zum Entfernen von Resten eines Schüttguts, wie zum Beispiel einer Bürste, kann daher verzichtet werden.

Um jedoch zuverlässige Messwerte für die Härte des Schüttguts 10 zu erhalten, muss das Schüttgut 10, nachdem es durch die Transportvorrichtung 13 in die Bruchkammer 1 transportiert wurde, optimal in der Bruchkammer 1 ausgerichtet sein. Optimal ausgerichtet ist das Schüttgut 10 dann, wenn es in einem bestimmten Bereich der Bruchkammer 1 angeordnet ist. Dieser Bereich wird im Folgenden als Bruchtestbereich bezeichnet und ist in der Figur 1 mit der Bezugsziffer 25 versehen.

Der Transport des Schüttguts 10 in den Bruchtestbereich 25, kann dadurch erfolgen, dass das Plattenelement 7 in Vibration versetzt wird. Zusätzlich kann mittels der Pressbacke 4 das Schüttgut 10 in den Bruchtestbereich 25 bewegt werden. Damit die Pressbacke 4 bewegt werden kann, ist sie mit einem Pressbackenantrieb verbunden, der in der Figur 1 nicht zu sehen ist.

Damit gewährleistet ist, dass das Schüttgut 10, nachdem das Schüttgut 10 in die Bruchkammer 1 eingebracht wurde, auch in den Bruchtestbereich 25 transportiert wird, überprüft eine Kamera, ständig die Position des Schüttguts 10 innerhalb der Bruchkammer 1. Zur genaueren Beobachtung kann auch mehr als nur eine Kamera, zum Beispiel zwei oder vier Kameras, vorgesehen sein. Bei der Kamera handelt es sich beispielsweise um eine Fotokamera oder um eine Videokamera. Die Kamera kann oberhalb des Bodens 8 der Bruchkammer 1 oder an einer Seite der Bruchkammer 1 angeordnet sein. Die Kamera ist in der Figur 1 nicht zu sehen. Obwohl mehrere Kameras in der Bruchkammer angeordnet sein können, ist es meist ausreichend, nur eine Kamera in der Bruchkammer vorzusehen. Deshalb wird im Folgenden auch nur von einer Kamera gesprochen.

Die Kamera fungiert somit als Sensor, mit der die Position des Schüttguts 10 in der Bruchkammer 1 beobachtet werden kann. Die Kamera nimmt dazu ein Bild des Schüttguts 10 auf, das in die Buchkammer 1 eingebracht worden ist. Dabei wird anhand eines in einem Steuerungscomputer hinterlegten Referenzbildes geprüft, ob das Schüttgut 10 in dem Bruchtestbereich 25 liegt. Dazu ist in dem Steuerungscomputer eine Datenverarbeitungseinrichtung vorgesehen (nicht gezeigt). In dieser Datenverarbeitungseinrichtung ist für diese spezielle Schüttgutsorte ein Referenzbild hinterlegt, das ein Schüttgut dieser Sorte in dem Bruchtestbereich zeigt. Liegt das Schüttgut 10 nicht in dem Bruchtestbereich 25, veranlasst der Steuerungscomputer, einen Bewegungsmechanismus das Schüttgut 10 so lange in der Bruchkammer 1 zu bewegen, bis dieses Schüttgut 10 in dem Bruchtestbereich 25 angeordnet ist, das heißt, bis das von der Kamera aufgenommene Bild mit dem Referenzbild übereinstimmt. Dabei können die aufgenommenen Bilder in der Datenverarbeitungseinrichtung auch abgespeichert werden.

Die Datenverarbeitungseinrichtung kann allerdings auch außerhalb des Steuerungscomputers angeordnet sein. In diesem Fall wäre die Kamera an der Datenverarbeitungseinrichtung angeschlossen und die Datenverarbeitungseinrichtung wiederum mit dem Steuerungscomputer verbunden. Jedes aufgenommene Bild wird an die Datenverarbeitungseinrichtung übergesendet. In der Datenverarbeitungseinrichtung wird dann geprüft, ob das aufgenommene Bild mit dem Referenzbild übereinstimmt. Sollte das aufgenommene Bild nicht mit dem Referenzbild übereinstimmen, so wird von der Datenverarbeitungseinrichtung ein elektrisches Signal an den Steuerungscomputer abgegeben, wodurch der Steuerungscomputer veranlasst wird, mindestens einen Bewegungsmechanismus zu betätigen, der das Schüttgut 10 innerhalb der Bruchkammer bewegt. Dieser Vorgang wird so lange wiederholt, bis das Schüttgut 10 in dem Bruchtestbereich 25 angeordnet ist.

Damit das Schüttgut 10 durch den Bewegungsmechanismus in der Bruchkammer 1 bewegt wird, gibt die Kamera über die Datenverarbeitungseinrichtung ständig ein elektrisches Signal an den Steuerungscomputer ab, und zwar so lange, bis das Schüttgut 10 in dem Bruchtestbereich 25 liegt und damit optimal ausgerichtet ist. Der Steuerungscomputer gibt aufgrund der von der Datenverarbeitungseinrichtung erhaltenen elektrischen Signale ein elektrisches Signal an einen Aktor weiter, wobei dieser Aktor den Bewegungsmechanismus veranlasst, das Schüttgut so lange in der Buchkammer 1 zu bewegen, bis das Schüttgut 10 in dem Bruchtestbereich 25 angeordnet ist.

Der Steuerungscomputer ist vorzugsweise in dem Prüfgerät 2 angeordnet und damit Teil des Prüfgeräts 2. Der Steuerungscomputer ist in der Figur 1 nicht gezeigt.

Mit diesem Verfahren findet also eine Echtzeitüberwachung der Position des Schüttguts 10 innerhalb der Bruchkammer 1 mittels der Kamera statt.

Der Steuerungscomputer gibt wiederum ein elektrisches Signal an einen Aktuator ab. Dieser Aktuator ist mit einem Bewegungsmechanismus verbunden, über den das Schüttgut 10 so lange in der Bruchkammer 1 bewegt wird, bis dieses Schüttgut 10 in dem Bruchtestbereich 25 liegt.

Bei dem Aktuator handelt es sich um den Vibrationsantrieb, mit dem das Plattenelement 7 in Vibration versetzt werden kann, oder um einen Pressbackenantrieb, mit dem die Pressbacke 4 bewegt werden kann, wobei mit der Pressbacke 4 das Schüttgut 10 in Richtung der Festbacke 3 bewegt werden kann. Das Plattenelement 7 sowie die Pressbacke 3 bilden somit einen Bewegungsmechanismus, mit dem das Schüttgut 10 in der Bruchkammer 1 bewegt und in dem Bruchtestbereich 25 positioniert werden kann.

Das Schüttgut 10 kann also nur durch die Pressbacke 4 beziehungsweise nur durch das Plattenelement 7 oder sowohl durch das Plattenelement 7 als auch durch die Pressbacke 4 in den Bruchtestbereich 25 bewegt werden.

Befindet sich das Schüttgut 10 schließlich in dem Buchtestbereich 25, ist das Schüttgut 10 optimal ausgerichtet, so dass der Bruchtest durchgeführt wird, indem die Pressbacke 4 das Schüttgut 10 so lange gegen die Festbacke 3 presst, bis das Schüttgut 10 zerbricht.

Möglich ist zudem, die Positionierung des Schüttguts 10 innerhalb der Bruchkammer 1 durch Drehung des Plattenelements 7 durchzuführen. Dazu kann unterhalb des Plattenelements 7 als Aktuator ein Drehantrieb angeordnet sein, mit dem das Plattenelement 7 gedreht werden kann. Die Drehbewegung ist durch die Pfeile 20 und 21 angedeutet. Der Drehantrieb ist in Figur 1 nicht zu sehen. Der Drehantrieb kann damit alternativ zu dem Vibrationsantrieb oder auch zusätzlich zu dem Vibrationsantrieb vorgesehen sein.

Es versteht sich, dass dieses Verfahren zur Positionierung des Schüttguts in dem Bruchtestbereich auch für andere Schüttgutsorten, zum Beispiel für Dragees oder Tabletten, angewandt werden kann. In diesem Fall muss in der Datenverarbeitungseinheit für diese andere Sorte an Schüttgut ein entsprechendes Referenzbild hinterlegt werden. In diesem hinterlegten Referenzbild wird das zu positionierende und zu vermessende Schüttgut dieser speziellen Sorte gezeigt, wie es optimal in dem Buchtestbereich angeordnet ist.

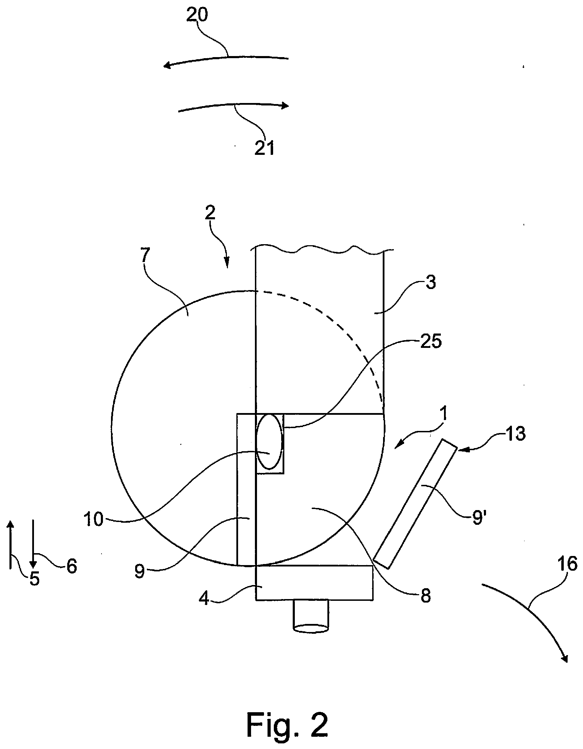

Figur 2 zeigt einen Ausschnitt des in der Figur 1 gezeigten Prüfgeräts 2. Das Schüttgut 10 ist dabei optimal in der Bruchkammer 1 ausgerichtet, weil es in dem Buchtestbereich 25 liegt. Deshalb kann nun der Bruchtest durchgeführt werden, indem die Pressbacke 4 in Richtung der Festbacke 3 bewegt wird, wodurch das zwischen der Festbacke 3 und der Pressbacke 4 befindliche Schüttgut 10 zerbrochen wird.

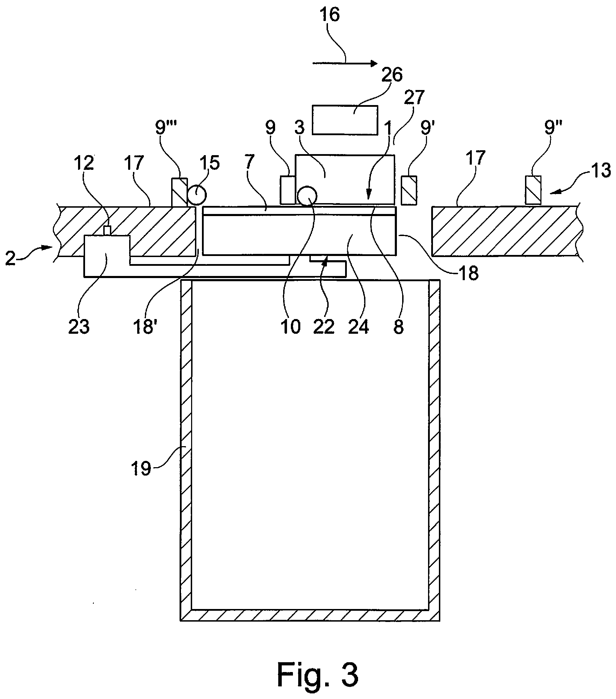

In Figur 3 ist eine schematische Darstellung eines Ausschnitts des Prüfgeräts 2 gemäß Figur 1 gezeigt, wobei ein Schnitt A-A durchgeführt wurde. Dabei ist auch das Schüttgut 10 zu sehen, das auf dem Boden 8 und vor der Festbacke 3 der Bruchkammer 1 liegt. Die Pressbacke ist in dieser Ansicht nicht zu sehen. Der Boden 8 der Bruchkammer 1 wird durch einen Teil des Plattenelements 7 gebildet. An dem Plattenelement 7 ist ein unterer Abschnitt 22 angebracht. Die Bruchkammer 1 wird zu der einen Seite von dem Widerlager 9 und auf der anderen Seite von dem weiteren Widerlager 9' begrenzt. Diese Widerlager 9 und 9' sowie die weiteren Widerlager 9", 9‴ und 9ʺʺ gehören zu der Transportvorrichtung 13, die jedoch nicht im Detail dargestellt ist. Mit dieser Transportvorrichtung 13 können weitere Schüttgüter 15 nacheinander in die Bruchkammer 1 transportiert werden, nachdem an dem Schüttgut 10 der Bruchtest durchgeführt wurde und die Reste des zerbrochenen Schüttguts 10 aus der Bruchkammer 1 entfernt wurden. Die Schüttgüter 15 werden somit entlang der Transportebene 17 in Richtung des Pfeils 16 in die Bruchkammer 1 bewegt. Das Plattenelement 7 mit dem daran angeordneten unteren Abschnitt 22 ist über einen Halter 23 mit dem Prüfgerät 2 derart verbunden, dass die Oberfläche des Plattenelements 7 von der Transportebene 17 entkoppelt ist, wodurch das Plattenelement 7 durch mindestens einen Vibrationsantrieb zu Vibrationen angeregt werden kann. Das Plattenelement 7 ist damit schwingbar in dem Prüfgerät 2 aufgehängt. Dieser mindestens eine Vibrationsantrieb ist in einem Gehäuse 24 des unteren Abschnitts 22 angeordnet und daher nicht zu sehen. In dem Gehäuse 24 kann zusätzlich auch noch ein nicht zu sehender Drehantrieb, mit dem das Plattenelement 7 gedreht werden kann, angeordnet sein.

In der Regel reicht es aus, für das Plattenelement 7 als Aktuator nur ein Vibrationsantrieb und nicht mehrere Vibrationsantriebe vorzusehen.

Der Halter 23 weist zumindest ein Verbindungselement auf, wobei in der Figur 3 nur ein Verbindungselement 12 zu sehen ist. Bei diesem mindestens einen Verbindungselement kann es sich zum Beispiel um eine Schraube handeln. Vorzugsweise ist unterhalb des Plattenelements 7 mit dem daran angeordneten unteren Abschnitt 22 ein Abfallbehälter 19 angeordnet. Wird ein Schüttgut, zum Beispiel das Schüttgut 10, durch einen Bruchtest zerbrochen, so werden größere Reste durch Bewegung des Widerlagers 9 in Richtung einer Öffnung 18 geschoben, wodurch diese Reste nach unten in den Abfallbehälter 19 fallen und so entsorgt werden. Kleinere Reste und auch Staub werden automatisch durch die Vibration des Plattenelements 7 aus der Bruchkammer 1 entfernt, wobei diese Reste durch die Öffnung 18 oder die Öffnung 18' in den Abfallbehälter 19 gelangen.

Die Kamera, mit der der Transport des Schüttguts 10 in den Bruchtestbereich (in Figur 3 ohne Bezugszeichen) beobachtet werden kann, trägt die Bezugsziffer 26. In Figur 3 ist die Kamera 26 oberhalb des Bodens 8 der Bruchkammer 1 angeordnet. Die Kamera 26 kann aber auch in einem Seitenbereich, beispielsweise in dem Seitenbereich 27 der Bruchkammer 1 angeordnet sein. Wichtig bei der Anbringung der Kamera 26 in der Bruchkammer 1 ist lediglich, dass mit der Kamera 26 die Position des Schüttguts 10 in dem Bruchtestbereich beobachtet werden kann.

Denkbar ist auch, dass die Kamera 26 oberhalb des Bodens 8 angeordnet ist und sich im Boden 8 eine Lichtquelle befindet. In diesem Fall besteht der Boden 8 aus einem transparenten Material, wie zum Beispiel Kunststoff, so dass ein Schattenbild des Schüttguts aufgenommen werden kann. Diese Variante ist in der Figur 3 jedoch nicht dargestellt.

### Bezugszeichenliste

1 Bruchkammer
2 Prüfgerät
3 Festbacke
4 Pressbacke
5 Pfeil
6 Pfeil
7 Plattenelement
8 Boden
9 Widerlager
10 Schüttgut
11 Verbindungselement
12 Verbindungselement
13 Transportvorrichtung
14 Schüttgut
15 Schüttgut
16 Pfeil
17 Transportebene
18 Öffnung
19 Abfallbehälter
20 Pfeil
21 Pfeil
22 Unterer Abschnitt
23 Halter
24 Gehäuse
25 Bruchtestbereich
26 Kamera
27 Seitenbereich

## Patentansprüche

1. Verfahren zum Positionieren von Schüttgütern (10, 14, 15) einer bestimmten Sorte in einer Bruchkammer (1) eines Prüfgeräts (2), wobei die Bruchkammer (1) durch einen Teil eines Plattenelements (7) gebildet wird, mit folgenden aufeinanderfolgenden Schritten:
1.1ein Schüttgut (10, 14, 15) der bestimmten Sorte wird in die Bruchkammer (1) des Prüfgeräts (2) eingebracht, wobei die Bruchkammer (1) einen Bruchtestbereich (25) aufweist;
1.2mit zumindest einer Kamera (26) wird ein Bild der Bruchkammer (1) aufgenommen;
1.3in einer Datenverarbeitungseinheit wird ein in der Datenverarbeitungseinheit hinterlegtes Referenzbild mit dem zumindest einen durch die zumindest eine Kamera (26) aufgenommen Bild verglichen und so überprüft, ob das Schüttgut (10, 14, 15) in dem Bruchtestbereich (25) der Bruchkammer (1) angeordnet ist;
1.4liegt das Schüttgut (10, 14, 15) nicht in dem Bruchtestbereich (25), so wird das Schüttgut (10, 14, 15) durch mindestens einen Bewegungsmechanismus (7, 4) so lange in der Bruchkammer (1) bewegt, bis das Schüttgut (10, 14, 15) in dem Bruchtestbereich (25) angeordnet ist, wobei der Bewegungsmechanismus (7, 4) das Plattenelement (7) und/oder eine Pressbacke (4) ist.

2. Verfahren zum Positionieren von Schüttgütern (10, 14, 15) in einer Bruchkammer (1) nach Patentanspruch 1, **dadurch gekennzeichnet, dass** die Pressbacke (4) einen als Pressbackenantrieb ausgebildeten Aktuator aufweist, mit dem die Pressbacke (4) in Bewegung versetzt wird.

3. Verfahren zum Positionieren von Schüttgütern (10, 14, 15) in einer Bruchkammer (1) nach Patentanspruch 1, **dadurch gekennzeichnet, dass** das Plattenelement (7) einen als Vibrationsantrieb ausgebildeten Aktuator aufweist, mit dem das Plattenelement (7) in.Vibration versetzt wird.

4. Verfahren zum Positionieren von Schüttgütern (10, 14, 15) in einer Bruchkammer (1) nach Patentanspruch 1, **dadurch gekennzeichnet, dass** solange ein elektrisches Signal an einen Steuerungscomputer abgegeben wird, bis das Schüttgut (10, 14, 15) in den Bruchtestbereich (25) bewegt wurde, wobei der Steuerungscomputer dazu ein elektrisches Signal an den Aktuator der entsprechenden Bewegungsmechanismen (4, 7) abgibt, wobei der Aktuator den entsprechenden Bewegungsmechanismus (4, 7) veranlasst, das Schüttgut (10, 14, 15) in den Bruchtestbereich (25) der Bruchkammer (1) zu bewegen.

5. Prüfgerät (2) zum Durchführen des Verfahrens nach den Patentansprüchen 1 bis 4.
